Europäisches Patentamt

European Patent Office (11) Numéro de publication : **0 166 630 B1**

Office européen des brevets

(12) **FASCICULE DE BREVET EUROPÉEN**

(45) Date de publication du fascicule du brevet :
02.12.87

(51) Int. Cl.⁴ : **B 60 T 8/18**

(21) Numéro de dépôt : **85400898.4**

(22) Date de dépôt : **09.05.85**

(54) **Dispositif de commande pour correcteur de freinage.**

(30) Priorité : **17.05.84 FR 8407628**

(43) Date de publication de la demande :
**02.01.86 Bulletin 86/01**

(45) Mention de la délivrance du brevet :
**02.12.87 Bulletin 87/49**

(84) Etats contractants désignés :
**DE GB IT SE**

(56) Documents cités :
**EP-A- 0 027 420**
**FR-A- 1 483 450**
**FR-A- 1 519 218**
**FR-A- 2 382 048**
**GB-A- 1 542 507**

(73) Titulaire : **BENDIX France**
**126, rue de Stalingrad**
**F-93700 Drancy (FR)**

(72) Inventeur : **Carre, Jean-Jacques**
**59, Boulevard de l'Est**
**F-93340 Le Raincy (FR)**
Inventeur : **Cheron, Jean-Marc**
**7, rue Maincourt Résidence La Pommeraie**
**F-77230 Longperrier (FR)**

(74) Mandataire : **Poidatz, Emmanuel et al**
**Service Brevets Bendix 44 rue François 1er**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un correcteur de freinage interposable entre une source de pression hydraulique et un circuit de freinage de véhicule.

L'invention se rapporte plus particulièrement à un correcteur du type comportant un boîtier pourvu d'au moins un alésage, un piston hydraulique simple ou différentiel coulissant dans ledit alésage et délimitant une première et une seconde chambres de pression susceptibles d'être reliées à la source de pression et au circuit de freinage, respectivement, ledit piston contrôlant l'écoulement d'un fluide sous pression entre lesdites chambres, et un dispositif de commande susceptible d'engendrer un effort pilote sur le piston hydraulique pour solliciter celui-ci vers l'intérieur du corps, le fluide sous pression engendrant un effort de réaction sollicitant le piston vers l'extérieur du corps, ledit dispositif de commande formant un sous-ensemble montable en bloc sur ledit boîtier et réglable en place et ledit sous-ensemble comportant une cloison fixe supportant l'effort d'un ressort de tarage et guidant une tige dudit piston pilote.

Un tel correcteur de freinage est notamment décrit, et son rôle ainsi que son mode de fonctionnement expliqués, dans le document FR-A-1 483 450, qui correspond au préambule de la revendication 1.

Dans ce dispositif l'effort pilote engendré sur le piston hydraulique pour solliciter celui-ci vers l'interieur du boîtier est dans le sens de l'interruption du fluide, tandis que l'effort de réaction sollicitant le piston vers l'extérieur du boîtier est dans le sens de l'établissement de l'écoulement de fluide.

Le document EP-A-0 027 420 décrit aussi un correcteur de freinage dont le dispositif de commande forme un sous-ensemble montable en bloc sur le boîtier et réglable en place.

Lorsque le dispositif de commande est du type à commande à fluide, et comporte un vérin incorporant un ressort de tarage pour définir l'effort pilote sur le piston hydraulique, un blocage du vérin peut intervenir par exemple à la suite d'un arrêt prolongé du vehicule et dans ce cas lors de l'application des freinages, l'effort de réaction engendré sur le piston hydraulique ne sera pas à même de repousser le verin et par conséquent l'écoulement de fluide ne pourra être interrompu au moment voulu. Le blocage du verin peut par exemple intervenir du fait d'un joint d'étanchéité en caoutchouc et qui présenterait « un collage » de pièces présentant un mouvement relatif, comme cela est bien connu de l'homme de l'art. Ce problème est encore accentué dans le cas où le vérin est soumis à une pression variable en fonction de la charge du véhicule, en effet outre le problème du « collage » la pression variable peut être fournie par de l'air assurant la suspension du véhicule, air qui peut être soit pollué, ce qui favoriserait l'encrassement des zones de coulissement, soit porteur d'eau, ce qui favoriserait soit la corrosion soit un blocage de la pièce coulissante en cas de gel.

Un tel blocage du vérin et corrélativement l'impossibilité dans laquelle se trouve le correcteur pour interrompre l'écoulement de fluide, peut provoquer la perte du contrôle du vehicule par blocage prématuré des roues arrières et ceci d'autant plus facilement dans le cas où le véhicule est faiblement chargé.

Ce type de commande présente également une difficulté de réglage du point de coupure, en effet, le ressort de tarage compris dans le dispositif de commande étant relativement puissant, la dispersion de l'effort fourni par ce ressort de tarage peut provoquer une dispersion importante des points de coupure et il est donc souhaitable de pouvoir régler l'effort fourni par le dispositif de commande une fois celui-ci en place sur le correcteur de façon à avoir la précision voulue du point de coupure.

La présente invention se donne pour but de résoudre ces problèmes et elle propose à cet effet, que dans un correcteur de freinage du type rappelé ci-dessus, l'effort pilote engendré sur le piston hydraulique pour solliciter celui-ci vers l'intérieur du boîtier est dans le sens de l'établissement dudit écoulement de fluide, et l'effort de réaction engendré sur ledit piston pour solliciter celui-ci vers l'extérieur du boîtier est dans le sens de l'interruption de l'écoulement de fluide, et que le sous-ensemble est formé par un corps tubulaire, le corps tubulaire se prolongeant au-delà de ladite cloison et se montant par sertissage, sur une portion cylindrique dudit boîtier sur laquelle il est fixe, ledit sertissage étant effectué lorsque, pour une pression donnée dans la chambre pilote et pour une pression donnée de la source de pression, l'écoulement de fluide entre les première et deuxième chambres est juste interrompu.

On obtient ainsi un ensemble correcteur muni de son dispositif de commande qui ne présente pas de risques de blocage du vérin, présentant les caractéristiques de fonctionnement voulu et d'une structure très simple.

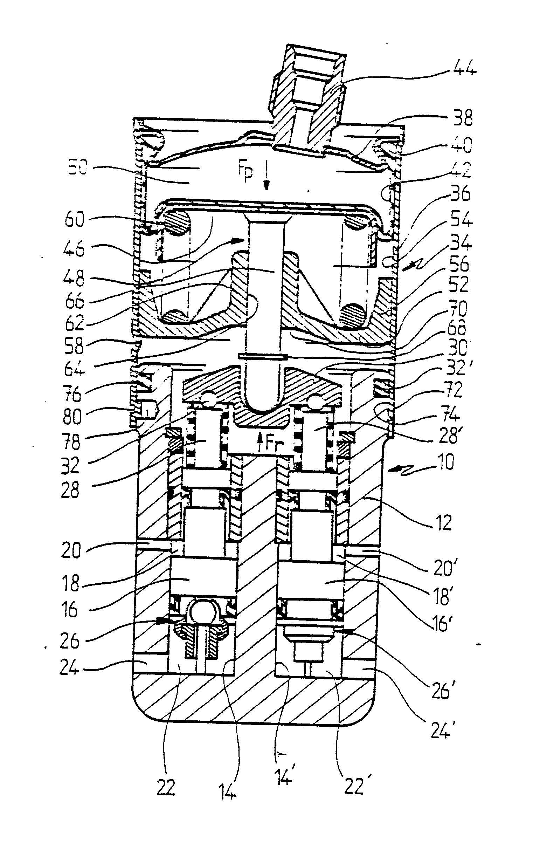

Les caractéristiques et avantages de l'invention apparaîtront plus clairement à la lecture de la description suivante d'une forme préférentielle de réalisation appliquée au cas d'un compensateur de freinage pour double circuit de freinage comportant un dispositif de commande asservi à la charge du véhicule au travers d'une pression pneumatique de suspension, donnée à simple titre d'exemple illustratif et en se référant à la figure unique annexée représentant en coupe un tel correcteur.

Le correcteur de freinage, désigné dans son ensemble par la référence 10, comporte un boîtier 12 dans lequel sont formés deux alésages parallèles 14 et 14'. Ces deux alésages 14 et 14' reçoivent chacun un piston 16 et 16' respectivement, étagés, susceptibles de coulisser de façon étanche par rapport au boîtier 12. Ces pistons 16 et 16' délimitent dans l'alésage correspondant une première chambre 18 et 18′ susceptible d'être reliée à une source de pression de fluide (non représentée) au travers d'orifice d'alimentation 20 et 20′ respectivement représenté schématiquement sur la figure. Les pistons 16 et 16′ délimitent chacun une deuxième chambre 22 et 22′ définie entre le fond de l'alésage et le piston correspondant, et susceptible d'être reliée à un circuit de freinage (non représenté), par exemple les roues arrières du véhicule au travers d'orifices de sortie 24 et 24′ représentés schématiquement sur la figure. D'une façon conventionnelle, les pistons 16 et 16′ comportent une soupape désignée dans son ensemble par la référence 26 et 26′ susceptible de mettre en communication les chambres 18 et 22 ou 18′ et 22′ suivant la position occupée par les pistons 16 et 16′ par rapport au boîtier 12. La figure représente les pistons 16 et 16′ dans une position fermée des soupapes. Les pistons hydrauliques 16 et 16′ présentent des extrémités 28 et 28′ qui se projettent hors des alésages 14 et 14′ et sur lesquels vient en appui un palonnier 30 au travers d'éléments présentant des surfaces sphériques 32 et 32′.

Dans le mode de réalisation représenté, les pistons hydrauliques 16 et 16′ sont étagés de manière à ce que le correcteur de freinage 10 fonctionne en compensateur, c'est à dire qu'après fermeture des soupapes toute augmentation de pression dans les premières chambres 18 et 18′ entraînent une augmentation de pression moindre dans les chambres 22 et 22′ d'une manière bien connue de l'homme de l'art.

Conformément à l'invention, un dispositif de commande formant un sous-ensemble 34 est monté en bloc sur le correcteur 10. Ce sous-ensemble 34, est formé par un corps tubulaire 36 sur lequel est rapporté serti un fond 38 maintenant de façon étanche un bourrelet 40 d'une membrane déroulante 42. Le fond rapporté 38 comporte un orifice d'entrée 44 destiné à être relié à une source de pression (non représentée) comme par exemple la pression de suspension du véhicule. La membrane 42 s'appuie par sa partie centrale sur le voile 46 d'un piston pilote 48. Une chambre de pilotage 50 est définie entre la membrane 42 et le fond 38.

Le sous-ensemble 34 comporte une cloison fixe 52 centrée sur la surface intérieure 54 du corps tubulaire 36 au moyen d'une partie cylindrique 56. Cette partie cylindrique 56 est en appui axial sur des saillies radiales 58 uniformément réparties sur une circonférence et obtenues en repoussant localement la matière du corps tubulaire vers l'intérieur de celui-ci. Un ressort de tarage 60 est placé entre la cloison fixe 52 et la jupe 46 du piston 48. La cloison 52 comporte une saillie centrale 62 dans laquelle est formé un alésage axial 64 dans lequel est montée de façon coulissante une tige 66 du piston 46 solidaire de la jupe de piston 46. La tige 66 se prolonge au-delà de la cloison 52 pour coopérer avec le palonnier 30. La tige 66 comporte une butée rapportée 68, formée par exemple par un circlips monté dans une gorge, butée susceptible de venir en appui axial sur la portion 70 de la cloison 52 sous l'effet du ressort 60 lorsque la chambre pilote 50 n'est pas reliée à la source de pression. On notera que la distance entre la butée 68 et la cloison 52 est telle que la membrane 42 ne peut venir en contact avec le fond 38 évitant ainsi à la membrane d'être endommagée. Le corps tubulaire 36 comporte un prolongement 72 monté sur une portion cylindrique 74 du boîtier 12. Un joint 76 monté dans une gorge formée dans le boîtier 12 et coopérant avec la surface intérieure 74 du prolongement 72 assure l'étanchéité entre le boîtier 12 et le corps tubulaire 36. Le boîtier 12 comporte des perçages 78 uniformément répartis sur une circonférence dans lesquels est repoussée par sertissage 80 de la matière du corps tubulaire 36 pour maintenir le sous-ensemble du dispositif de commande en place par rapport au correcteur 10.

Le correcteur équipé de son dispositif de commande qui vient d'être décrit se monte de la façon suivante :

Dans un premier temps on réalise le montage du sous-ensemble 34 du dispositif de commande. Pour cela on monte d'abord dans le corps tubulaire 36 la cloison 52 qui vient en appui sur les butées 58 préalablement formées. En ayant soin de mettre en place le ressort de tarage 60, on monte le piston 48 et plus psrticulièrement la tige 66 est introduite dans l'alésage 64. En comprimant le ressort 60 la tige 66 traverse la cloison 52 et on procède au montage de la butée axiale 68. L'effort exercé sur le piston 48 peut alors être relâché et la butée 68 vient sur la surface 70 de la cloison 52 maintenant ainsi le ressort 60 comprimé entre la jupe du piston et la cloison fixe. On procède alors au montage du fond rapporté 38 équipé de la membrane 42 en veillant bien que le bourrelet 40 reste bien emprisonné entre le fond 38 et le corps tubulaire 36, on procède alors au sertissage du fond 38 sur le corps 36, le fond 38 ayant été préalablement équipé de son orifice d'entrée 44.

Le correcteur 10 ayant été préalablement équipé d'une façon conventionnelle de ces pistons 16 et 16′ et du balancier 30 on procède à l'assemblage du dispositif de commande sur le correcteur 10. Pour cela on engage le prolongement 72 du corps tubulaire 36 sur la portion cylindrique 74 du boîtier 12 en prenant soin de ne pas endommager le joint 76.

En maintenant le dispositif de commande 34 par rapport au correcteur 10 on raccorde les orifices d'entrée 20 et 20′ à une source de pression et les orifices de sortie 24 et 24′ à un circuit de contrôle, de même on raccorde l'orifice d'entrée 44 à une source de pression pneumatique. On établit alors des pressions prédéterminées aux différentes entrées puis par déplacement axial du dispositif de commande par rapport au correcteur 10 on détermine la position au corps tubulaire 36 par rapport au boîtier 12 de manière à obtenir une pression de coupure du correcteur prédéterminée par rapport aux différentes pressions introduites tant dans la chambre pilote que dans les chambres d'entrée et de sortie. On procède alors au sertissage 80 du sous-ensemble 34 sur le correcteur 10, toutes les tolérances de fabrication où la dispersion des efforts des ressorts ayant été intégré lors de la définition de la position relative entre le dispositif de commande et le correcteur. Il n'est donc nécessaire de procéder à aucun autre réglage.

Le fonctionnement de cet ensemble correcteur et de son dispositif de commande fonctionne de la manière suivante :

Lorsque la chambre pilote est normalement reliée à la pression de suspension du véhicule, ou à toute autre pression fixe ou variable, cette pression régnant dans la chambre 50 engendre un effort pilote qui comprime le ressort 60 et permet d'appliquer sur le palonnier 30 un effort pilote Fp directement lié à la pression régnant dans la chambre 50. Le ressort de tarage 60 permettant de doser cet effort Fp. Les chambres 18 et 18' étant alimentées en fluide sous pression, et les pistons 16 et 16' étant repoussés vers le fond de leurs aléssges 14 et 14' par le piston pilote 48 l'écoulement de fluide est assuré entre les chambres 18 et 22 d'une part et 18' et 22' d'autre part. Lorsque la pression augmente dans les chambres 22 et 22', ces pressions engendrent des efforts de réaction qui sollicitent le palonnier 30 à l'encontre de l'effort Fp et déterminent sur celui-ci un effort de réaction Fr. Lorsque l'effort de réaction Fr est tel qu'il est égal à l'effort pilote Fp les trois pistons 16, 16' et 48 se déplacent vers le haut en se référant à la planche unique permettant ainsi l'interruption de l'écoulement de fluide entre les chambres 18 et 22 d'une part et 18' et 22' d'autre part, ayant atteint la pression de coupure voulue pour une pression pilote dans la chambre pilote 50 déterminée. Toute augmentation de la pression de la source de fluide dans les chambres 18 et 18' ou bien une augmentation de la pression pilote dans la chambre 50 provoque une réouverture des soupapes 26 et 26' et donc rétablissent l'écoulement de fluide jusqu'à ce que de nouveau les efforts de réaction et les efforts pilotes se rééquilibrent.

Grâce à l'invention, on voit que tout blocage du piston pilote 46 du fait de la corrosion par exemple est impossible étant donné que le coulissement du piston pilote ne peut être pollué par l'air de la pression pilote la membrane assurant la séparation. Le coulissement du piston étant effectué par sa tige elle-même dans une zone fermée non polluable et donc à l'abri de la corrosion. De même on voit que le sertissage du dispositif de commande sur le correcteur 10 permet de s'affranchir de toutes les tolérances, le sertissage étant effectué lorsque le point de coupure est obtenu pour des paramètres d'entrée donnés. Enfin, le dispositif de commande formant sous-ensemble peut être aisément fabriqué et assemblé avant son montage sur correcteur, ce qui simplifie le montage final sans risquer une détérioration du dispositif de commande du fait du ressort de tarage 60.

Il est bien évident que l'invention n'est pas limitée au mode de réalisation présenté, en particulier le correcteur peut être un correcteur à simple piston hydraulique du type limiteur de pression et bien évidemment il peut ne comporter qu'un seul et unique piston hydraulique. De même, la structure du dispositif de commande peut subir des modifications sans sortir du cadre de la présente invention.

## Revendications

1. Dispositif de commande pour correcteur de freinage (10) interposable entre une source de pression hydraulique et un circuit de freinage de véhicule automobile, du type comportant un boîtier (12) pourvu d'au moins un alésage (14,14'), un piston hydraulique (16,16') simple ou différentiel coulissant dans ledit alesage (14,14') et y délimitant une première (18,18') et une seconde (22,22') chambres de pression susceptibles d'être reliées à la source de pression et au circuit de freinage respectivement, ledit piston (16,16') contrôlant l'écoulement d'un fluide sous pression entre lesdites chambres, le dispositif de commande comportant un piston pilote (48) à fluide susceptible d'engendrer un effort pilote (Fp) sur ledit piston hydraulique (16,16') pour solliciter celui-ci vers l'intérieur du boîtier (12), le fluide sous pression engendrant un effort de réaction (Fr) sollicitant ledit piston (16,16') vers l'extérieur du boîtier (12), ledit dispositif de commande formant un sous-ensemble (34) montable en bloc sur ledit boîtier (12) et réglable en place et ledit sous-ensemble (34) comportant une cloison fixe (52) supportant l'effort d'un ressort de tarage (60) et guidant une tige (66) dudit piston pilote (48), caractérisé en ce que l'effort pilote (Fp) engendré sur le piston hydraulique (16,16') pour solliciter celui-ci vers l'intérieur du boîtier (12) est dans le sens de l'établissement dudit écoulement de fluide, et l'effort de réaction (Fr) engendré sur ledit piston (16,16') pour solliciter celui-ci vers l'extérieur du boîtier (12) est dans le sens de l'interruption de l'écoulement de fluide, et en ce que le sous-ensemble (34) est formé par un corps tubulaire (36), le corps tubulaire (36) se prolongeant au-delà de ladite cloison (52) et se montant par sertissage (80) sur une portion cylindrique (74) dudit boîtier (12) sur laquelle il est fixé, ledit sertissage (80) étant effectué lorsque, pour une pression donnée dans la chambre pilote (50) et pour une pression donnée de la source de pression, l'écoulement de fluide entre les première (18,18') et (22,22') deuxième chambres est juste interrompu.

2. Dispositif de commande selon la revendication 1 caractérisé en ce que ledit dispositif comporte un fond rapporté (38) sur le corps tubulaire (36) et en ce que ledit fond (38) maintient une membrane déroulante (42) du piston pilote (48) en assurant l'étanchéité entre le corps (36) et le fond rapporté (38) et formant entre ladite membrane (42) et ledit fond (38) une chambre pilote (50).

3. Dispositif de commande selon la revendication 2 caractérisé en ce que ledit corps tubulaire (36) est équipé de ladite cloison (52) fixe par rapport audit corps (36) et centrée sur une surface intérieure (54) dudit corps tubulaire (36).

4. Dispositif de commande selon la revendication 3 caractérisé en ce que ladite cloison (52) comporte un alésage axial (64) formé dans une saillie centrale (62) de ladite cloison, alésage (64) qui reçoit ladite tige (66) dudit piston pilote (48) placé entre ladite cloison (52) et ledit fond rapporté (38).

5. Dispositif de commande selon la revendication 4 caractérisé en ce que ledit ressort de tarage (60) est placé entre ladite cloison (52) et ledit piston pilote (48).

6. Dispositif de commande selon la revendication 5 caractérisé en ce que ladite tige (66) comporte une butée axiale (68) susceptible de venir en appui sur ladite cloison (52-70) sous l'effet dudit ressort de tarage (60) évitant ainsi audit piston pilote (48) de venir en contact avec ledit fond rapporté (38).

7. Dispositif de commande selon l'une des revendications 1 à 6 caractérisé en ce que ledit piston pilote (48) est susceptible d'être soumis à une pression qui varie avec la charge du véhicule.

**Claims**

1. Control device for a brake regulator (10) adapted to be interposed between a hydraulic pressure source and an automotive vehicle brake circuit, of the type comprising a casing (12) provided with at least one bore (14,14'), a simple or a differential hydraulic piston (16,16') sliding in said bore (14,14') and delimiting therein first (18,18') and second (22,22') pressure chambers adapted to be connected to the pressure source and the brake circuit respectively, said piston (16,16') controlling the flow of a pressure fluid between said chambers, the control device comprising a fluid pilot piston (48) adapted to exert a pilot force (Fp) upon said hydraulic piston (16,16') for biasing the latter towards the interior of the casing (12), the pressure fluid generating a reaction force (Fr) biasing the piston (16,16') towards the exterior of the casing (12), said control device forming a sub-assembly (34) mountable as a block on said casing (12) and being adjustable in its position, and said sub-assembly (34) comprising a fixed partition (52) supporting the force of a balance spring (60) and guiding a rod (66) of said pilot piston (48), characterized in that the pilot force (Fp) exerted upon the hydraulic piston (16,16') for biasing the latter towards the interior of the casing (12) is in the sense of establishing said fluid flow and the reaction force (Fr) exerted on said piston (16,16') for biasing the latter towards the exterior of the casing (12) is in the sense of interrupting the fluid flow, and in that the sub-assembly (34) is formed by a tubular member (36), the tubular member (36) extending beyond said partition (52) and being mounted on a cylindrical portion (74) of said casing (12) to which it is fixed, by stamping (80), said stamping (80) being effected when for a predetermined pressure in the pilot chamber (50) and for a predetermined pressure of the pressure source, the fluid flow between the first (18,18') and second (22,22') chambers is just interrupted.

2. Control device according to claim 1, characterized in that said device comprises an inserted bottom (38) on the tubular member (36) and in that said bottom (38) maintains a rolling diaphragm (42) of the pilot piston (48) thereby assuring the sealing between the member (36) and the inserted bottom (38) and forming a pilot chamber (50) between said diaphragm (42) and said bottom (38).

3. Control device according to claim 2, characterized in that said tubular member (36) is provided with said partition (52) fixed with respect to said member (36) and centered on an internal surface (54) of said tubular member (36).

4. Control device according to claim 3, characterized in that said partition (52) comprises an axial bore (64) formed in a central projection (62) of said partition, which bore (64) receives said rod (66) of said pilot piston (48) disposed between said partition (52) and said inserted bottom (38).

5. Control device according to claim 4, characterized in that said balancing spring (60) is disposed between said partition (52) and said pilot piston (48).

6. Control device according to claim 5, characterized in that said rod (66) comprises an axial abutment (68) adapted to engage said partition (52-70) under the action of said balancing spring (60) thereby to prevent said pilot piston (48) from contacting said inserted bottom (38).

7. Control device according to any of claims 1 to 6, characterized in that said pilot piston (48) is adapted to be submitted to a pressure varying in response to the vehicle load.

**Patentansprüche**

1. Bremskraftregler (10), der zwischen einer hydraulischen Druckquelle und einem Kraftfahrzeug-Bremskreis einsetzbar ist, mit einem Gehäuse (12), das mit mindestens einer Bohrung (14,14') versehen ist, einem hydraulischen Einfach- oder Stufenkolben (16,16'), der in der Bohrung (14,14') gleitet und dort eine erste Druckkammer (18,18') und eine zweite Druckkammer (22,22') begrenzt, die an der Druckquelle beziehungsweise am Bremskreis anschließbar sind, wobei der Kolben (16,16') die Strömung eines Druckmittels zwischen diesen Kammern steuert, wobei der Bremskraftregler einen Vorsteuerkolben (48) aufweist, der eine Vorsteuerkraft (Fp) auf den hydraulischen Kolben (16,16') ausübt, um diesen ins Innere des Gehäuses (12) vorzuspannen, wobei das Druckmittel eine Reaktionskraft (Fr) erzeugt, die den Kolben (16,16') in Richtung aus dem Gehäuse (12) heraus vorspannt, wobei der Bremskraftregler eine Baueinheit (34) bildet, die als Block am Gehäuse (12) lageveränderlich anbringbar ist und eine ortsfeste Trennwand (52) aufweist, welche die Kraft einer Ausgleichsfeder (60) aufnimmt und eine Stange (66) des Vorsteuerkolbens (48) führt, dadurch gekennzeichnet, daß die Vorsteuerkraft (Fp), welche von dem hydraulischen Kolben (16,16') erzeugt wird, um diesen ins Innere des Gehäuses (12) vorzuspannen, im Sinne der Herstellung der Strömungsverbindung gerichtet ist und die Reaktionskraft (Fr), die auf den Kolben (16,16') ausgeübt wird, um diesen in Richtung aus dem Gehäuse (12) heraus vorzuspannen, im Sinne des Unterbrechens der Strömungsverbindung gerichtet ist, und daß die Baueinheit (34) von einem Rohrkörper (36) gebildet wird, der sich über die Trennwand (52) hinaus erstreckt und durch einen Falzvorgang (80) an einem zylindrischen Abschnitt (74) des Gehäuses. (12) befestigt ist, wobei der Falzvorgang (80) durchgeführt wird, wenn bei einem vorgegebenen Druck in der Vorsteuerkammer (50) und bei einem vorgegebenen Druck der Druckquelle die Strömung zwischen der ersten Kammer (18,18') und der zweiten Kammer (22,22') gerade unterbrochen ist.

2. Bremskraftregler nach Anspruch 1, dadurch gekennzeichnet, daß der Bremskraftregler einen am Rohrkörper (36) angesetzten Boden (38) aufweist, und daß der Boden (38) eine Abrollmembran (42) des Vorsteuerkolbens (48) hält, wodurch die Abdichtung zwischen dem Rohrkörper (36) und dem angesetzten Boden (38) sichergestellt wird und zwischen der Membran (42) und dem Boden (38) eine Vorsteuerkammer (50) gebildet wird.

3. Bremskraftregler nach Anspruch 2, dadurch gekennzeichnet, daß der Rohrkörper (36) mit der Trennwand (52) versehen ist, die bezüglich des Rohrkörpers (36) festgelegt und auf einer Innenfläche des Rohrkörpers (36) zentriert ist.

4. Bremskraftregler nach Anspruch 3, dadurch gekennzeichnet, daß die Trennwand (52) eine Axialbohrung (64) aufweist, die in einem zentralen Vorsprung (62) der Trennwand gebildet ist, wobei die Bohrung (84) die Stange (66) des Vorsteuerkolbens (46) aufnimmt, welcher zwischen der Trennwand (52) und dem angesetzten Boden (38) angeordnet ist.

5. Bremskraftregler nach Anspruch 4, dadurch gekennzeichnet, daß die Ausgleichsfeder (60) zwischen der Trennwand (52) und dem Vorsteuerkolben (48) angeordnet ist.

6. Bremskraftregler nach Anspruch 5, dadurch gekennzeichnet, daß die Stange (66) einen axialen Anschlag (68) aufweist, der sich unter der Wirkung der Ausgleichsfeder (60) an der Trennwand (52-70) anlegen kann, um somit zu verhindern, daß der Vorsteuerkolben (48) mit dem angesetzten Boden (38) in Berührung gelangt.

7. Bremskraftregler nach einem der Ansprüche 1 bis 6, dadurch gekennzeichnet, daß der Vorsteuerkolben (48) einem mit der Fahrzeuglast veränderlichen Druck aussetzbar ist.

0 166 630

1